# EUROPEAN PATENT SPECIFICATION

(11) **EP 3 270 135 B1**
(45) Date of publication and mention of the grant of the patent: **27.07.2022**
(21) Application number: 16000928.8
(22) Date of filing: 25.04.2016
(51) Int. Cl.: G01M 15/09, F02B 37/22, G01M 15/14, F02M 26/00, G01M 15/02

(54) **MACHINE FOR ADJUSTMENT OF TURBINE COMPRESSOR VARIABLE GEOMETRY (VG) COMPONENTS**
MASCHINE ZUM ABGLEICHEN VARIABLER GEOMETRIEKOMPONENTEN EINES GASTURBINENKOMPRESSORS
MACHINE POUR LE RÉGLAGE DE COMPOSANTS À GÉOMÉTRIE VARIABLE DE COMPRESSEUR DE TURBINE

(30) Priority: 31.12.2015 PL 41569115
(43) Date of publication of application: 17.01.2018
(73) Proprietor: Przedsiebiorstwo "Cimat" Spolka z Ograniczona Odpowiedzialnoscia, 85-862 Bydgoszcz (PL)
(72) Inventor: Waszak, Krzysztof, 85-605 Bydgoszcz (PL)

(56) References cited:
- DE-U1-202014 005 586
- US-A1- 2008 236 266

## Description

The invention is a machine for adjustment of turbine compressor variable geometry (VG) components, complete with an assembly system of air hoses for connection with the turbine compressor mounted on the machine intended for testing and adjusting turbine compressor performance, and offering the capacity of free setting of mounted turbine compressors.

A description in Patent no. PL 151337 is known of a pressure measurement system, comprising a membrane sensor which features a bridged strain gauge system coupled with an input signal amplifier. The essence of the invention is that the system comprises a transmitting part, formed by the sensor and the amplifier connected to the sensor output and loaded with a transistor stage, being a current amplifier, and a receiving part which is connected to the transmitting part with a two-wire cable and built with an input threshold system, connected with a stabiliser, and where the transmitting and receiving parts have a common power source.

A description in Patent no. PL 156267 is known of a pressure measurement system, comprising a chemical reactor coupled with a quartz membrane on which rests one end of a quartz bar located inside a supply tube. Mounted on the supply tube is an IR photocoupler sensor, and in its field of view is the other end of the quartz bar contemplated herein. The electric output of the IR photocoupler sensor is connected to electromagnetic vacuum valves via an electronic control system. The inlet of one of the electromagnetic vacuum valves is connected to a vacuum pump via a reducer; the outlet of the same valve is connected via a system of tubes to a pressure gauge, the supply tube, and the inlet of the other electromagnetic vacuum valve. The outlet of the other electromagnetic vacuum valve opens to ambient air via a reducer.

A description in Patent no. PL 159285 is known of a method of pressure measurement and a pressure transducer. The method of the invention consists in setting the diaphragm to apply pressure in perpendicular to it, and in parallel to a thick-layer resistor under the perpendicularly applied pressure in order to measure the change in the resistance caused by the resulting deformations ex, ey and ex in the directions lengthwise, crosswise and perpendicular to the resistor.

A description of Patent no. PL 188903 is known of a pressure measurement system which solves the problem of increasing the accuracy of pressure measurement in a wide measurement range. The inputs of the pressure transmitters are connected to the measurement input of the system via motorized stop valves. The pressure transducer outputs are connected in parallel via an a-c converter with a microchip which features a data input block. The microprocessor output is connected via a c-c converter with the electrical inputs of the stop valves, and with an indicator. The system ensures a high accuracy of pressure measurement across the entire measurement range while applying simpler engineering measures, including simpler pressure transducers. Moreover, the system allows automatic selection of many sensitivity levels.

DE202014005586U discloses an adapter for fastening turbocharger to a test bench, particularly flow-analysis test bench, which has a holding magnet suitable to hold the turbocharger at the adapter, where the holding magnet is formed as a permanent magnet or a electromagnet.

US2008236266 discloses a method of diagnosing turbochargers for internal combustion engines.

The invention is a machine according to claim 1.

The invention facilitates adjustment of turbine compressor variable geometry (VG) components on the machine intended for testing and adjusting turbine compressor performance, and offering the capacity of free setting of mounted turbine compressors. The invention facilitates retention of a vertical alignment of the axis of oil inlet and outlet ports on a turbine compressor. The machine also facilitates diversion of the same axis by max. 20° from the vertical, which allows liberal setting up the turbine compressor during its preliminary mounting on the machine's station. Locking the contact clamp facilitates constraining the movement of the horizontal axis, and locking down the clamping nut facilitates constraining the movement of the vertical axis. The entire system ensures tight connections. This solution permits proper mounting of the turbine compressor on the machine's station. The cross-section of the supply tube is sufficient to assure stable filling of the chamber, whereas the ports facilitate quick acceleration of the turbine compressor rotor.

The invention is shown on an isometric drawing.

### Example of embodiment

The example of embodiment is a machine for adjustments of turbine compressor variable geometry (VG) components, complete with an assembly system of air hoses for connection with the turbine compressor mounted on the machine intended for testing and adjusting turbine compressor performance, and offering the capacity of free setting of mounted turbine compressors. The machine is characteristic by a horizontal beam (9) that is adjusted in its rotation axis and the bottom part of the beam features a blinding plate (10), whereas the top part of the beam has a sealing plate (5) from which a fixed port (4) extends, whereas on the fixed port is a clamping nut (3) with a universal port (2) and a turbine compressor interface adapter (1). The horizontal beam (9) rests on supports (7 & 11), and its front end at the support (11) is attached to the supply pipeline (12), whereas the other end of the beam at the support (7) features a contact clamp (8) and a hand wheel (6).

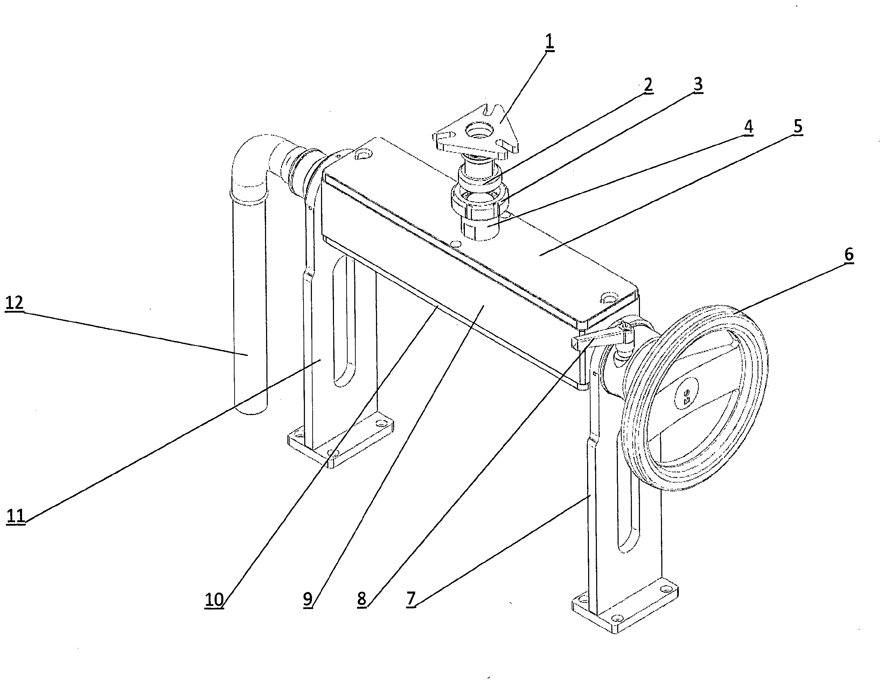

## Claims

1. A machine for adjustments of turbine compressor variable geometry (VG) components, comprising
an assembly system made of air hoses for connection with the turbine compressor mounted on said machine intended for testing and adjusting turbine compressor performance, and offering the capacity of free setting of mounted turbine compressors,
**characterised in that**
the machine comprises a horizontal beam (9) that is adjustable in its rotation axis, wherein the bottom part of the beam features a blinding plate (10) and the top part of the beam has a sealing plate (5) from which a fixed port (4) extends;
wherein on the fixed port is a clamping nut (3) with a universal port (2) and a turbine compressor interface adapter (1),
wherein the horizontal beam (9) rests on supports (7) and (11), the front end of the beam at the support (11) being attached to the supply pipeline (12) and the other end of the beam at the other support (7) featuring a contact clamp (8) for constraining the movement of the horizontal axis and a hand wheel (6).

## Patentansprüche

1. Maschine zum Einstellen von Komponenten eines Turbinenverdichters mit variabler Geometrie (VG),
die ein Montagesystem aus Luftschläuchen zur Verbindung mit dem auf der Maschine montierten Turbinenverdichter umfasst, das zum Prüfen und Einstellen der Leistung des Turbinenverdichters bestimmt ist und die Möglichkeit bietet, die montierten Turbinenverdichter frei einzustellen
**dadurch gekennzeichnet, dass**
die Maschine einen horizontalen Balken (9) umfasst, der in seiner Drehachse verstellbar ist, wobei der untere Teil des Balkens eine Abdeckplatte (10) und der obere Teil des Balkens eine Dichtungsplatte (5) aufweist, von der eine feste Öffnung (4) ausgeht;
wobei auf dem festen Anschluss eine Spannmutter (3) mit einem Universalanschluss (2) und einem Turbinenverdichter-Schnittstellenadapter (1) sitzt,
wobei der horizontale Balken (9) auf Stützen (7) und (11) ruht, wobei das vordere Ende des Balkens an der Stütze (11) an der Versorgungsleitung (12) befestigt ist und das andere Ende des Balkens an der anderen Stütze (7) eine Kontaktklammer (8) zur Begrenzung der Bewegung der horizontalen Achse und ein Handrad (6) aufweist.

## Revendications

1. Une machine pour les ajustements des composants à géométrie variable (VG) d'un turbocompresseur, comprenant
un système de montage constitué de tuyaux d'air destinés à être raccordés au turbocompresseur monté sur ladite machine, destiné à tester et à ajuster la performance du turbocompresseur, et offrant la possibilité de régler librement les turbocompresseurs montés,
**caractérisée en ce que**
la machine comprend une poutre horizontale (9) qui est ajustable dans son axe de rotation, dans laquelle la partie inférieure de la poutre comporte une plaque d'aveuglement (10) et la partie supérieure de la poutre comporte une plaque d'étanchéité (5) à partir de laquelle s'étend un raccord fixe (4) ;
dans lequel sur le raccord fixe se trouve un écrou de serrage (3) avec un raccord universel (2) et un adaptateur d'interface turbocompresseur (1),
dans laquelle la poutre horizontale (9) repose sur des supports (7) et (11), l'extrémité avant de la poutre au niveau du support (11) étant fixée à la conduite d'alimentation (12) et l'autre extrémité de la poutre au niveau de l'autre support (7) présentant une pince de contact (8) pour contraindre le mouvement de l'axe horizontal et un volant (6).
